# EUROPÄISCHE PATENTSCHRIFT

(11) **EP 0 632 221 B1**
(45) Veröffentlichungstag und Bekanntmachung des Hinweises auf die Patenterteilung: **10.12.1997**
(21) Anmeldenummer: 94105602.0
(22) Anmeldetag: 12.04.1994
(51) Int. Cl.: F16K 47/10, F16L 55/027

(54) **Drosselventil**
Throttle valve
Soupape d'étranglement

(30) Priorität: 27.05.1993 DE 4317604
(43) Veröffentlichungstag der Anmeldung: 04.01.1995
(73) Patentinhaber: FESTO AG & Co, 73734 Esslingen (DE)
(72) Erfinder: Stoll, Kurt, Dipl.-Ing., D-73732 Esslingen (DE)
(74) Vertreter: Abel, Martin, Dipl.-Ing.

(56) Entgegenhaltungen:
- EP-A- 0 475 833
- DE-C- 4 007 101
- FR-A- 2 511 744
- US-A- 2 924 237
- US-A- 3 056 423
- US-A- 4 073 311

## Beschreibung

Die Erfindung betrifft ein Drosselventil, mit einem Gehäuse, in dem ein Drosselkanal verläuft, der mit zwei Anschlußöffnungen zur Zufuhr und/oder Abfuhr von fluidischem Druckmittel kommuniziert, und mit einem an dem Gehäuse angeordneten Drosselorgan, das mit dem Drosselkanal zusammenwirkt und zur Veränderung dessen Durchströmquerschnittes in einer Einstellrichtung bezüglich dem Gehäuse hin und her verstellbar ist, wobei an dem Drosselorgan eine in Einstellrichtung ausgerichtete Anschlußöffnung vorgesehen ist, an die sich ein das Drosselorgan durchsetzender Abschnitt des Drosselkanales anschließt.

Ein derartiges, als Drossel-Rückschlagventil ausgebildetes Drosselventil geht aus der US-A-2 924 237 hervor. Dieses bekannte Drosselventil verfügt über ein Gehäuse, das von einem Drosselorgan durchsetzt ist, an dessen beiden Enden jeweils eine Anschlußöffnung vorgesehen ist. An die beiden Anschlußöffnungen lassen sich weiterführende Kanäle anschließen, die in einer pneumatischen Einrichtung, beispielsweise einem Arbeitszylinder, oder in Druckmittelleitungen oder -schläuchen ausgebildet sind. Zur Veränderung der Drosselungsintensität werden das Gehäuse und das Drosselorgan relativ zueinander bewegt, woraus eine axiale Verlagerung des Drosselorganes relativ zu dem im Gehäuse ausgebildeten Abschnitt des Drosselkanales er- folgt.

Ist das bekannte Drosselventil mit einer seiner Anschlußöffnungen an einem Bauteil festgelegt und sind Änderungen an der Drosseleinstellung notwendig, muß ein großer Umfangsbereich des Gehäuses stets zugänglich gehalten werden. Dies führt zu Beschränkungen bei der Installation des Drosselventiles oder mit diesem ausgerüsteter Einrichtungen. Im Verstellbereich des Gehäuses ist genügend Freiraum vorzusehen, der von benachbarten Einrichtungen nicht belegt werden darf.

Es ist die Aufgabe der vorliegenden Erfindung, ein Drosselventil der eingangs genannten Art zu schaffen, das ohne Beeinträchtigung seiner Einstellmöglichkeiten weniger Installationsraum benötigt.

Diese Aufgabe wird dadurch gelöst, daß die andere Anschlußöffnung an dem Gehäuse vorgesehen ist und daß das Drosselorgan bezüglich der in Einstellrichtung verlaufenden Achse seiner Verstellbewegung unverdrehbar gegenüber dem Gehäuse fixiert ist und über eine Gewindeverbindung mit einem es koaxial umschließenden, ring- oder hülsenförmigen Betätigungselement in Eingriff steht, das bezüglich dem Gehäuse verdrehbar und in Einstellrichtung unverstellbar angeordnet ist.

Auf diese Weise fällt die Einstellseite des Drosselventiles mit einer der beiden Anschlußseiten zusammen. Es muß deshalb für die Einstellung des Drosselorganes kein zusätzlicher Installationsraum freigehalten werden. Man nutzt denjenigen Umfangsbereich des Drosselventiles aus, der wegen einer sich dort anschließenden Einrichtung, Leitung oder dergleichen sowieso nicht mehr anderweitig nutzbar ist. Beim Einstellvorgang behalten das Gehäuse und das Drosselorgan ihre relative Winkellage bezüglich der in Einstellrichtung verlaufenden Achse bei, indem zwischen das Gehäuse und das Drosselorgan ein drehbares Betätigungsglied zwischengeschaltet ist, das mit dem unverdrehbar festgelegten Drosselorgan in Gewindeeingriff steht. Die Einstellung der Durchflußmenge kann somit auch dann verändert werden, wenn an die andere Anschlußöffnung eine Druckmittelleitung angeschlossen ist, die bei einem Verdrehen Schaden nehmen würde. Als Gewinde kann beispielsweise ein übliches Schraubgewinde vorgesehen sein, bei dem es sich insbesondere um ein Feingewinde handelt. Die Gewindesteigung kann jedoch bedarfsgemäß gewählt werden, ebenso die Anzahl der vorhandenen Gewindegänge.

Vorteilhafte Weiterbildungen der Erfindung sind in den Unteransprüchen aufgeführt.

Eine Weiterbildung der Erfindung, bei der die beiden Anschlußöffnungen unter koaxialer Ausrichtung einander entgegengesetzten Gehäuseseiten des Drosselventiles zugeordnet sind, läßt sich besonders platzsparend in einen linearen Druckmittel-Leitungsstrang einschalten. Zwar sind Drosselventile mit entsprechender Ausrichtung der Anschlußöffnungen bereits bekannt - die Anmelderin selbst vertreibt schon seit längerem ein entsprechendes Ventil unter der Typenbezeichnung GRO. Die Einstellung der Drosselungsintensität hat dort jedoch seitlich zu erfolgen, indem das Drosselorgan im rechten Winkel zu dem linearen Leitungsstrang angeordnet und zu verstellen ist. Bei der vorgeschlagenen Weiterbildung hingegen liegen sowohl die beiden Anschlußseiten als auch die Einstellseite auf einer Linie, so daß sich insgesamt eine sehr schlanke Bauweise ergibt.

Das erfindungsgemäße Drosselventil ist vorzugsweise als Drossel-Rückschlagventil ausgebildet und enthält eine geeignete Rückschlagventileinrichtung. Diese ist bei koaxial zueinander ausgerichteten Anschlußöffnungen vorzugweise koaxial zwischen diesen angeordnet. Wenigstens einer der beiden Anschlußöffnungen, insbesondere derjenigen, die in das Drosselorgan integriert ist, ist zweckmäßigerweise eine Steckverbindungseinrichtung für Druckmittelleitungen und/oder -schläuche zugeordnet, die ein rasches Anschließen und Entfernen entsprechender Leitungen bzw. Schläuche ermöglicht. Eine in Einstellrichtung extrem kurze Bauweise stellt sich in diesem Zusammenhang ein, wenn das Drosselorgan selbst das Gehäuse einer solchen Steckverbindungseinrichtung bildet. Der sich an die Anschlußöffnung des Drosselorganes anschließende und das Drosselorgan durchsetzende Drosselkanalabschnitt kann als Aufnahme für eine Spannzange dienen, wobei insbesondere eine Ausgestaltung gewählt wird, die derjenigen entspricht, die in der DE 40 07 101 C1 im einzelnen erläutert wird.

Die am Drosselorgan angeordnete Steckverbindungseinrichtung ist zweckmäßigerweise so ausgestaltet, daß das angeschlossene Leitungs- bzw. Schlauchteil bezüglich dem Drosselorgan um eine mit der Einstellrichtung zusammenfallende Achse frei drehbar ist.

Zur Arretierung der jeweils eingestellten Drosselungsintensität kann eine vom Drosselorgan getragene und mit dem Betätigungselement zusammenarbeitende Kontermutter vorgesehen sein.

Nachfolgend wird die Erfindung anhand der beiliegenden Zeichnung erläutert. In dieser zeigen:

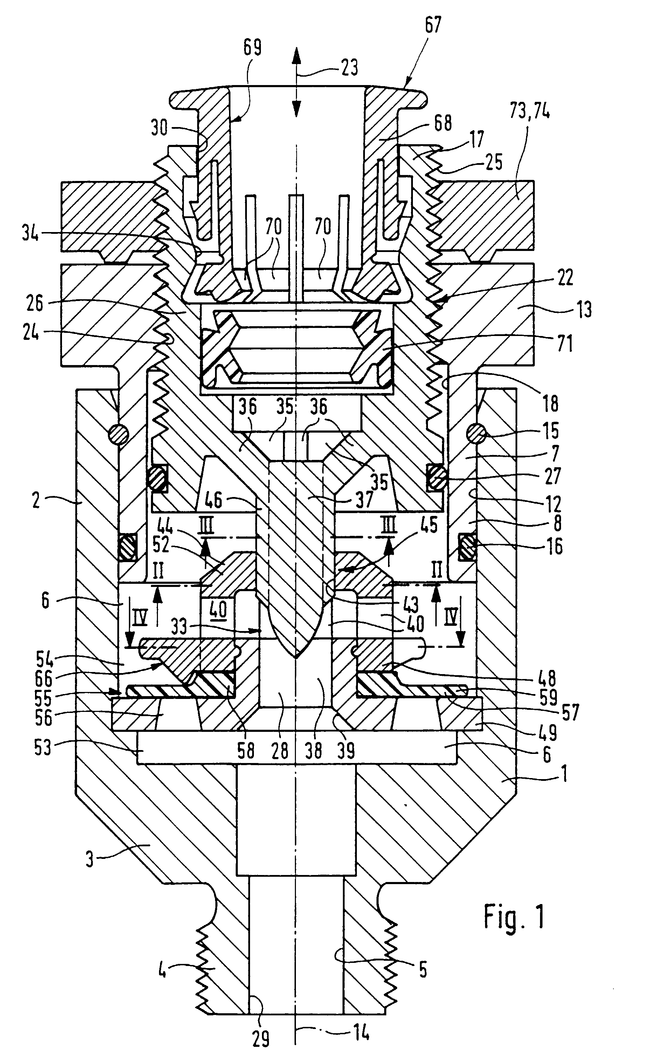

- Figur 1: eine erste Bauform des erfindungsgemäßen Drosselventiles in einer Ausgestaltung als Drossel-Rückschlagventil im Längsschnitt,

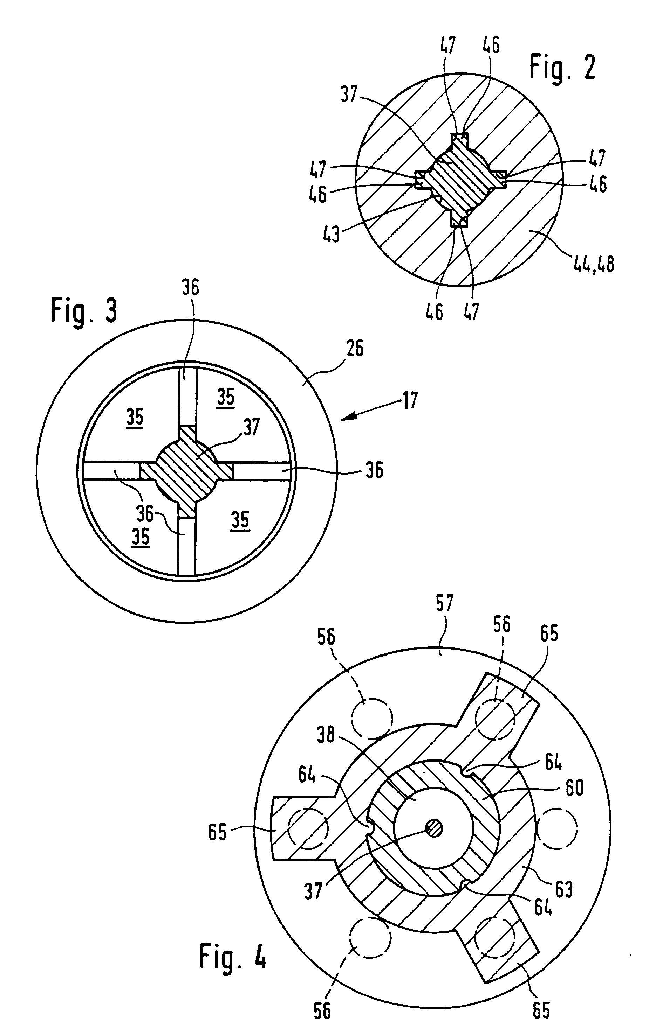

- Figur 2: einen Querschnitt durch das Drosselventil aus Figur 1 gemäß Schnittlinie II-II,
- Figur 3: einen Querschnitt durch das Drosselventil aus Figur 1 gemäß Schnittlinie III-III, und
- Figur 4: einen Querschnitt durch das Drosselventil aus Figur 1 gemäß Schnittlinie IV-IV.

Das beispielsgemäße Drosselventil mit einstellbarer Drossel umfaßt ein becherähnliches Gehäuse 1 mit einer hohlzylindrischen Seitenwand 2 und einem sich stirnseitig an diese anschließenden Boden 3 mit einem zentralen Einschraubstutzen 4. Der Boden 3 ist koaxial von einem ersten Kanalabschnitt 5 durchzogen, der den von der Seitenwand 2 begrenzten Gehäuseinnenraum 6 mit der Umgebung verbindet.

In den Gehäuseinnenraum 6 ist von der dem Boden 3 entgegengesetzten offenen Stirnseite her ein ringähnliches Betätigungselement 7 koaxial eingesetzt. Es verfügt über einen hülsenartig Führungsabschnitt 8, der an der Innenfläche 12 der Seitenwand 2 gleitfähig anliegt. An den Führungsabschnitt 8 ist ein außerhalb des Gehäuses 1 liegender ringförmiger Betätigungsabschnitt 13 angeformt, der den Führungsabschnitt 8 nach Art eines Bundes radial nach außen überragt, so daß er der zugeordneten Stirnfläche der Seitenwand 2 axial vorgelagert ist.

Das Betätigungselement 7 ist mit der Gehäuse-Längsachse 14 als Drehachse relativ zu dem Gehäuse 1 frei drehbar. Die relative Axialposition zwischen dem Betätigungselement 7 und dem Gehäuse 1 ist hingegen unveränderlich fixiert. Erreicht wird dies beim Ausführungsbeispiel dadurch, daß beide Teile im Bereich ihrer zylindrischen Kontaktflächen über auf gleicher Axialhöhe liegende konzentrische umlaufende Vertiefungen verfügen, in die gleichzeitig ein eingelegter Fixierring 15 eingreift, der das notwendige Drehbewegungsspiel gewährleistet.

Radial zwischen dem Führungsabschnitt 8 und der Seitenwand 2 ist ferner ein die beiden Teile gegeneinander abdichtender Dichtring 16 vorgesehen, der beispielsgemäß in einer Außenumfangsnut des innenliegenden Führungsabschnittes 8 gefangen ist.

In der zentralen Durchbrechung 18 des Betätigungselementes 7 sitzt ein Drosselorgan 17. Über eine Gewindeverbindung 22 ist das Drosselorgan 17 so an dem Betätigungselement 7 gelagert, daß bei einer relativen Drehbewegung zwischen diesen beiden Teilen eine Axialbewegung des Drosselorganes 17 in Richtung der Gehäuse-Längsachse 14 stattfindet, welche linear verlaufende Bewegungsrichtung im vorliegenden als Einstellrichtung 23 bezeichnet wird. Da das Drosselorgan 17 gegenüber dem Gehäuse 1 auf noch zu erläuternde Weise verdrehgesichert ist, läßt sich das Drosselorgan 17 durch Verdrehen des Betätigungselements 7 am Betätigungsabschnitt 13 entsprechend der gewählten Drehrichtung in den Gehäuseinnenraum 6 hinein oder aus diesem heraus verlagern.

Die Gewindeverbindung 22 ist beim Ausführungsbeispiel dadurch realisiert, daß am Betätigungselement 7 im Bereich der zentralen Durchbrechung 18 ein Mutterngewinde 24 vorgesehen ist, dessen axiale Länge vorzugsweise der axialen Länge des Befestigungsabschnittes 13 entspricht. Das Mutterngewinde 24 steht mit einem Außengewinde 25 eines hülsenähnlichen Längenabschnittes 26 des Drosselorganes 17 in Eingriff, wobei die axiale Länge des Außengewindeabschnittes größer ist als diejenige des Mutterngewindeabschnittes. Die Abmessungen sind so aufeinander abgestimmt, daß dem Drosselorgan 17 ein geforderter Verstellbereich in Einstellrichtung 23 zur Verfügung steht.

Das Drosselorgan 17 ist bezüglich dem Betätigungselement 7 abgedichtet, wobei radial zwischen den beiden Teilen ein Dichtring 27 vorgesehen ist, der beim Ausführungsbeispiel in einer Außenumfangsnut des hülsenähnlichen Längenabschnittes 26 gehalten ist.

Durch das Gehäuse 1 verläuft ein Drosselkanal 28, der über zwei Anschlußöffnungen 29, 30 zur Umgebung hin ausmündet. über diese Anschlußöffnungen 29, 30 kann fluidisches Druckmittel, insbesondere Druckluft, jeweils zugeführt und/oder abgeführt werden, so daß es den Drosselkanal 28 zwischen den beiden Anschlußöffnungen 29, 30 durchströmt. Im Gehäuseinnenraum 6 ist im Verlauf des Drosselkanals 28 eine Drosselstelle 33 vorgesehen, an der der dem Druckmittel zur Verfügung Durchströmquerschnitt im Vergleich zu den sich anschließenden Kanalabschnitten veränderlich reduzierbar ist, um die durch das Drosselventil hindurchströmende Durchflußmenge des Druckmittels zur Anpassung an den Bedarf eines angeschlossenen Verbrauchers zu regulieren. Der an der Drosselstelle 33 jeweils vorliegende Durchströmquerschnitt hängt von der vom Drosselorgan 17 momentan eingenommenen Einstellposition ab, die sich durch Verstellung in Einstellrichtung 23 stufenlos vorgeben läßt.

Die erste Anschlußöffnung 29 ist am Gehäuse 1 vorgesehen und von der außenliegenden Mündung des ersten Kanalabschnittes 5 gebildet. Die zweite Anschlußöffnung 30 hingegen ist nicht am Gehäuse 1, sondern am Drosselorgan 17 vorgesehen. Sie weist in Einstellrichtung 23, d.h. ihre Öffnungsebene verläuft rechtwinkelig zu dieser Einstellrichtung 23. Vorzugsweise ist die Anordnung so getroffen, daß die Gehäuse-Längsachse 14 das Zentrum der zweiten Anschlußöffnung 30 bildet, wobei die Gehäuselängsachse 14 beim Ausführungsbeispiel auch das Zentrum der ersten Anschlußöffnung 29 bildet, so daß beide Anschlußöffnungen 29, 30 koaxial zueinander ausgerichtet sind und sich im Bereich einander entgegengesetzter Gehäuseseiten befinden. Diese Anordnung ermöglicht eine problemlose Einschaltung des Drosselventils in einen linearen Leitungsverlauf, man kann das Drosselventil also "In-Line" einsetzen.

Das Drosselorgan 17 ist axial von einem zweiten Kanalabschnitt 34 durchsetzt, der sich an die zweite Anschlußöffnung 30 anschließt und zum Gehäuseinnenraum 6 ausmündet. Er bildet wie der erste Kanalabschnitt 5 einen Längenabschnitt des Drosselkanals 28. Sein dem Gehäuseinnenraum 6 zugewandte Mündungsbereich setzt sich aus mehreren, hier: vier Durchlässen 35 zusammen, die um die Gehäuse-Längsachse 14 herum angeordnet sind und durch radial verlaufende Stege 36 voneinander abgeteilt sind. Besagte Stege 36 dienen als Träger für eine mit dem hülsenähnlichen Längenabschnitt 26 fest verbundene zapfen- oder stiftähnliche Drosselpartie 37 des Drosselorgans 17, die sich koaxial zur Gehäuse-Längsachse 14 in Richtung des Bodens 3, mit Abstand vor diesem endend, erstreckt.

Die Drosselpartie 37 ragt mit ihrem vom hülsenähnlichen Längenabschnitt 26 wegweisenden Ende voraus in einen dritten Kanalabschnitt 38 des Drosselkanals 28 hinein, der im Gehäuseinnenraum 6 ausgebildet ist und zwischen den ersten und zweiten Kanalabschnitt 5, 34 zwischengeschaltet ist. Er setzt sich aus einer dem ersten Kanalabschnitt 5 zugewandten und koaxial zu diesem ausgerichteten Kanalpartie 39 sowie mindestens einer und vorzugsweise mehreren quer zur ersten Kanalpartie 39 verlaufenden zweiten Kanalpartien 40 zusammen, die mit dem zweiten Kanalabschnitt 34 kommunizieren. Der Übergangsbereich zwischen den beiden Kanalpartien 39, 40 bildet die Drosselstelle 33, indem dort die Drossel partie 37 durch eine der erste Kanalpartie 39 koaxial gegenüberliegende Durchbrechung 43 der Kanalwand 44 in den dritten Kanalabschnitt 38 hineinragt. Die Eintauchtiefe der Drosselpartie 37 wird von der Einstellposition des Drosselorgans 17 vorgegeben, die somit im übergangsbereich zwischen den beiden Kanalpartien 39, 40 den von der Eintauchtiefe abhängenden, dem Druckmittel zur Verfügung stehenden Durchströmquerschnitt vorgibt.

Die zweiten Kanalpartien 40 münden in den Gehäuseinnenraum 6 aus und kommunizieren über diesen mit den Durchlässen 35 zum zweiten Kanalabschnitt 34.

Wie bereits erwähnt, ist eine Einrichtung 45 zur Verdrehsicherung zwischen dem Drosselorgan 17 und dem Gehäuse 1 vorgesehen. Sie ist beispielsgemäß dem Durchdringungsbereich zwischen der Drosselpartie 37 und der den dritten Kanalabschnitt 38 begrenzenden gehäusefesten Kanalwand 44 vorgesehen. Sie ist vorzugsweise gebildet von mindestens einer und zweckmäßigerweise mehreren am Außenumfang der Drosselpartie 37 angeordneten und sich in Einstellrichtung 23 erstreckenden Längsrippen 46, die in komplementären nutartigen Vertiefungen 47 laufen, welche im Umfangsbereich der Durchbrechung 43 vorgesehen sind. Auf diese Weise wird bei guter Axialführung eine zuverlässige Verdrehsicherung bei jedweder Einstellposition gewährleistet.

Die Kanalwand 44 kann einstückiger Bestandteil des Gehäuses 1 sein. Beim Ausführungsbeispiel ist sie jedoch Bestandteil eines in den Gehäuseinnenraum 6 eingesetzten und mit dem Gehäuse 1 fest verbundenen Einsatzteils 48. Dieses hat hutähnliche Gestalt mit einer scheibenähnlichen Befestigungspartie 49 und einer kappenähnlichen Kopfpartie 52 geringeren Durchmessers. Die Befestigungspartie 49 ist umfangsseitig an der Seitenwand 2 verankert und unterteilt den Gehäuseinnenraum 6 in einen mit der ersten Anschlußöffnung 29 kommunizierenden ersten Raumabschnitt 53 und einen mit der zweiten Anschlußöffnung 30 kommunizierenden zweiten Raumabschnitt 54. Die Kopfpartie 52 ragt in den zweiten Raumabschnitt 54 hinein und enthält die Drosselstelle 33 sowie die beiden Kanalpartien 39, 40. Das Druckmedium ist nunmehr im Drosselbetrieb gezwungen, die Drosselstelle 33 zu passieren.

Da es sich bei dem beispielsgemäßen Drosselventil um ein Drossel-Rückschlagventil handelt, ist auch noch eine Rückschlagventileinrichtungen 55 in das Gehäuse 1 integriert. Sie ist der Drosselstelle 33 parallel geschaltet und so ausgebildet, daß sie dem Druckmittel eine Durchströmung in der einen Richtung unter Umgehung der Drosselstelle 33 ermöglicht, während sie bei in Gegenrichtung strömendem Druckmittel den oder die betreffenden Umgehungskanäle 56 verschließt, so daß das Druckmittel gezwungen ist, den Strömungsweg über die Drosselstelle 33 zu nehmen. Als Umgehungskanäle 56 sind beim Ausführungsbeispiel mehrere Durchbrechungen der Befestigungspartie 49 vorgesehen, die die beiden Raumabschnitte 53, 54 unmittelbar miteinander verbinden. Diese Umgehungskanäle 56 liegen radial außerhalb der Kopfpartie 52 und sind entlang deren Umfanges verteilt angeordnet. Ihnen allen ist ein gemeinsames Ventilglied 57 zugeordnet, das als ringscheibenähnliches Elastomerteil ausgebildet ist und von der einen Axialseite her die Umgehungskanäle 56 abdeckend an der Befestigungspartie 49 anliegt. Da beim Ausführungsbeispiel von der ersten zur zweiten Anschlußöffnung 29, 30 ein ungedrosselter freier Durchgang gewünscht ist, befindet sich das Ventilglied an der dem oberen ersten Raumabschnitt 53 zugewandten Axialseite der Befestigungspartie 49. Sie ist mit einem radial innen liegenden ringförmigen Halterungsabschnitt 58 an dem Einsatzteil fixiert, während der radial außerhalb liegende und ebenfalls ringförmige Verschlußabschnitt 59 nur lose an der Befestigungspartie 49 anliegt, so daß er vom Druckmittel je nach Strömungsrichtung unter Absperrung der Umgebungskanäle 56 dichtend gegen die Befestigungspartie 49 angepreßt oder unter Freigabe der Umgehungskanäle 56 von der Befestigungspartie 49 abgehoben wird. Zur bequemen Montage des Ventilgliedes 57 ist das Einsatzteil 48 im Bereich der Kopfpartie 52 zweigeteilt. Der Halterungsabschnitt 58 ist auf einen mit der Befestigungspartie 59 verbundenen kragenartigen Abschnitt 60 aufgesetzt und wird von einem ebenfalls auf letzteren aufgesetzten kappenähnlichen Abschnitt 63 flankiert und gehalten. Da letzterer zur Verdrehsicherung des Drosselorgans 17 beiträgt, ist er am kragenartigen Abschnitt 60 drehfest festgelegt, beispielsweise durch geeignete Rastmittel 64.

Auf der den Umgehungskanälen 56 entgegengesetzten Axialseite kann das Ventilglied 57 noch von einem oder mehreren Stabilisierungsarmen 65 flankiert sein, die ausgehend von der Kopfpartie 52 radial nach außen ragen und an der letztgenannten festgelegt sind. Sie sind zweckmäßigerweise so ausgebildet, daß sie das Ventilglied 57 in dem Bereich beaufschlagen, der auf dem Teilkreis der Umgehungskanäle 56 liegt. Auf diese Weise wird verhindert, daß sich der elastische Verschlußabschnitt 59 beim Freigeben der Umgehungskanäle 56 umstülpt und nicht mehr selbstätig in die Schließstellung zurückkehrt. Die Stabilisierungsarme 65 können auch dazu dienen, das Ventilglied 57 in die Schließstellung vorzuspannen. Dem Ventilglied 57 kann im Bereich eines jeden Umgehungskanals 56 ein solcher Stabilisierungsarm 65 zugeordnet sein. Die Konturierung 66 der Stabilisierungselemente 65 ist bei alledem so gewählt, daß sie die Schaltbewegung des Ventilgliedes 57 nicht behindern.

Durch die vorhandene Rückschlagventileinrichtung 55 wird die Baubreite des Drosselventils nicht und seine Baulänge nur unwesentlich vergrößert. Die beiden Anschlußöffnungen 29, 30 und die Rückschlagventileinrichtung 55 liegen koaxial in Reihe. Die Einstellseite für das Drosselorgan, die vom Betätigungsabschnitt 13 vorgegeben wird, fällt mit der durch die zweite Anschlußöffnung 30 vorgegebenen einen Anschlußseite zusammen, so daß sich insgesamt eine sehr platzsparende und kostengünstig herstellbare Einrichtung ergibt. Prinzipiell könnte das gesamte Drosselventil aus Kunststoffmaterial bzw. Polymermaterial hergestellt werden.

Das beispielsgemäße Drosselventil ist so ausgelegt, daß es mit seinem der ersten Anschlußöffnung 29 zugeordneten Einschraubstutzen 4 unmittelbar an einer mit Druckmittel zu betätigenden Einrichtung festgelegt werden kann. Auf diese Weise läßt sich das Drosselventil beispielsweise unmittelbar an einem Arbeitszylinder anbringen, indem man es in eine dort vorgesehene Anschlußöffnung einschraubt. Im Bereich der zweiten Anschlußöffnung 30 könnten prinzipiell auch Mittel vorgesehen sein, die eine Einschraubmontage eines weiterführenden Bauteils ermöglichen. Wesentlich vorteilhafter ist jedoch die beim Ausführungsbeispiel gezeigte Bauform, bei der der zweiten Anschlußöffnung 30 eine Steckverbindungseinrichtung 67 für Druckmittelleitungen und/oder schläuche zugeordnet ist, die drosselorganseitig festgelegt ist. Bevorzugt bildet das Drosselorgan 17 selbst das Gehäuse der Steckverbindungseinrichtung 67, in das eine Spannzange 68 eingesetzt ist, mittels derer die anzuschließende Druckmittelleitung bzw. der Druckmittelschlauch lösbar am Drosselorgan 17 festlegbar ist. Beim Ausführungsbeispiel bildet der sich an die zweite Anschlußöffnung 30 anschließende zweite Kanalabschnitt 34 des Drosselkanals die Aufnahme für die vorzugsweise ringoder hülsenförmige Spannzange 68, so daß sich eine extrem kurze axiale Bauweise einstellt. Die zweite Anschlußöffnung 30 und die eine Einstecköffnung 69 für die zugeordnete Druckmittelleitung aufweisende Spannzange 68 sind hierbei konzentrisch angeordnet.

Um eine Druckmittelleitung an die zweite Anschlußöffnung 30 anzuschließen, muß sie lediglich in die Einstecköffnung 69 der Spannzange 68 eingesteckt werden, bis sie von Spannelementen 70 derselben haltend beaufschlagt wird. Um die Druckmittelleitung wieder zu entnehmen, wird beim Ausführungsbeispiel in Richtung nach axial innen Druck auf die Spannzange 69 ausgeübt, was bewirkt, daß die Spannelemente 70 die eingesteckte Druckmittelleitung zum Herausziehen freigeben.

Ein bevorzugter Aufbau der Steckverbindungseinrichtung 67 geht im einzelnen aus der DE 40 07 101 C1 hervor, auf die ausdrücklich verwiesen wird, so daß sich an dieser Stelle detailliertere Ausführungen erübrigen. Entsprechend der dort beschriebenen Steckverbindungseinrichtung kann auch im vorliegenden Falle in dem zweiten Kanalabschnitt 34 axial auf die Spannzange 68 folgend ein Dichtungsrichtung 71 eingelegt sein, der die eingesteckte Druckmittelleitung dichtend umschließt und bezüglich dem als Gehäuse fungierenden Drosselorgan 17 abdichtet. Der zweite Kanalabschnitt 34 kann problemlos in einer Weise konturiert sein, die den Gegebenheiten des vorgesehenen Typs von Steckverbindungseinrichtung 67 Rechnung trägt.

Die Steckverbindungseinrichtung 67 ist vorzugsweise so ausgelegt, daß eine eingesteckte Druckmittelleitung bezüglich dem Drosselorgan 17 um die Gehäuse-Längsachse 14 frei drehbar bleibt. Beim Ausführungsbeispiel wird dies dadurch realisiert, daß die Spannzange 68 entsprechend drehbar im zweiten Kanalabschnitt 34 aufgenommen ist.

Um die Einstellung der Durchflußmenge bei an die zweite Anschlußöffnung 30 angeschlossener Druckmittelleitung zu verändern, ist lediglich der Betätigungsabschnitt 13 im radial nach außen weisenden Umfangsbereich zu erfassen und zu drehen. Um die Betätigung zu erleichtern, kann der betreffende Umfangsabschnitt beispielsweise mit einer Rändelung versehen sein. Er kann auch in einer Weise ausgebildet sein, daß sich ein Schraubwerkzeug ansetzen läßt.

Um die gewählte Einstellposition vorübergehend zu arretieren, ist beim Ausführungsbeispiel ein Sicherungselement 73 vorhanden, mit dem sich die gewählte Relativposition zwischen dem Betätigungselement 7 und dem Drosselorgan 28 fixieren läßt. Es ist vorzugsweise von einer auf dem Außengewinde 25 laufenden Kontermutter 74 gebildet, die axial außerhalb des Betätigungselements 7 angeordnet ist und sich mit diesem verspannen läßt.

## Patentansprüche

1. Drosselventil, mit einem Gehäuse (1), in dem ein Drosselkanal (28) verläuft, der mit zwei Anschlußöffnungen (29, 30) zur Zufuhr und/oder Abfuhr von fluidischem Druckmittel kommuniziert, und mit einem an dem Gehäuse (1) angeordneten Drosselorgan (17), das mit dem Drosselkanal (28) zusammenwirkt und zur Veränderung dessen Durchströmquerschnittes in einer Einstellrichtung (23) bezüglich dem Gehäuse (1) hin und her verstellbar ist, wobei an dem Drosselorgan (17) eine in Einstellrichtung (23) ausgerichtete Anschlußöffnung (30) vorgesehen ist, an die sich ein das Drosselorgan (17) durchsetzender Abschnitt (34) des Drosselkanales (28) anschließt, dadurch gekennzeichnet, daß die andere Anschlußöffnung (29) an dem Gehäuse (1) vorgesehen ist und daß das Drosselorgan (17) bezüglich der in Einstellrichtung (23) verlaufenden Achse seiner Verstellbewegung unverdrehbar gegenüber dem Gehäuse (1) fixiert ist und über eine Gewindeverbindung (22) mit einem es koaxial umschließenden, ringoder hülsenförmigen Betätigungselement (7) in Eingriff steht, das bezüglich dem Gehäuse (1) verdrehbar und in Einstellrichtung (23) unverstellbar angeordnet ist.

2. Drosselventil nach Anspruch 1, dadurch gekennzeichnet, daß die beiden Anschlußöffnungen (29, 30) koaxial zueinander ausgerichtet sind, wobei sie einander entgegengesetzten Gehäuseseiten zugeordnet sind.

3. Drosselventil nach Anspruch 2, dadurch gekennzeichnet, daß koaxial zwischen den beiden Anschlußöffnungen (29, 30) im Gehäuse (1) eine Rückschlagventileinrichtung (55) angeordnet ist.

4. Drosselventil nach einem der Ansprüche 1 bis 3, dadurch gekennzeichnet, daß wenigstens einer der beiden Anschlußöffnungen (30) eine Steckverbindungseinrichtung (67) zum lösbaren Anschluß von Druckmittelleitungen und/oder -schläuchen zugeordnet ist.

5. Drosselventil nach Anspruch 4, dadurch gekennzeichnet, daß das Drosselorgan (17) das Gehäuse einer Steckverbindungseinrichtung (67) bildet, wobei in dem zugeordneten Drosselkanalabschnitt (34) eine von außen her betätigbare und bezüglich dem Drosselorgan (17) insbesondere frei drehbare Spannzange (68) einsitzt.

6. Drosselventil nach einem der Ansprüche 1 bis 5, dadurch gekennzeichnet, daß das Drosselorgan (17) einen die zugeordnete Anschlußöffnung (30) enthaltenden hülsenartigen Längenabschnitt (26) aufweist, an den sich koaxial eine mit dem Drosselkanal (28) zusammenarbeitende, insbesondere stift- oder zapfenähnliche Drosselpartie (37) anschließt, wobei zwischen dem hülsenartigen Längenabschnitt (26) und der Drosselpartie (37) im Umfangsbereich der Drosselpartie (37) mindestens ein Durchlaß (35) vorgesehen ist, über den der im Drosselorgan (17) verlaufende Abschnitt (34) des Drosselkanales (28) mit dem im Gehäuse (1) verlaufenden Abschnitt des Drosselkanales (28) kommuniziert.

7. Drosselventil nach einem der Ansprüche 1 bis 6, dadurch gekennzeichnet, daß ein Sicherungselement (72) zur Arretierung der Relativposition zwischen dem Drosselorgan (17) und dem Betätigungselement (7) vorgesehen ist, das zweckmäßigerweise von einer vom Drosselorgan (17) getragenen Kontermutter (74) gebildet ist, die mit dem Betätigungselement (7) verspannbar ist.

8. Drosselventil nach einem der Ansprüche 1 bis 7, dadurch gekennzeichnet, daß das Betätigungselement (7) mit einem hülsenartigen Führungsabschnitt (8) in einer Ausnehmung des Gehäuses (1) drehgelagert ist und einen sich an den Führungsabschnitt (8) anschließenden, außerhalb dieser Ausnehmung liegenden Betätigungsabschnitt (13) aufweist, der bezüglich dem Führungsabschnitt (8) zweckmäßigerweise nach radial außen vorsteht.

9. Drosselventil nach einem der Ansprüche 1 bis 8, dadurch gekennzeichnet, daß das Gehäuse (1) eine im wesentlichen zylindrische Außenkontur aufweist, wobei die beiden Anschlußöffnungen (29, 30) den beiden einander entgegengesetzten Stirnseiten des Gehäuses (1) zugeordnet sind.

## Claims

1. Restrictor valve with a housing (1) in which runs a restrictor passage (28) which communicates with two connection openings (29, 30) for the supply and/or removal of fluid pressure medium, and with a restrictor element mounted on the housing (1), working in conjunction with the restrictor passage (28) and adjustable to and fro in a setting direction (23) relative to the housing (1) in order to vary the flow cross-section, wherein a connection opening (30) aligned in the setting direction (23) is provided on the restrictor element (17) and is joined by a section (34) of the restrictor passage (28) which passes through the restrictor element (17), characterized in that the other connection opening (29) is provided on the housing (1) and that the restrictor element (17) is fixed, unable to rotate relative to the housing (1), with reference to the axis of its adjustment movement running in the setting direction (23), and engages via a threaded connection (22) with an annular or sleeve-shaped actuating element (7) which coaxially encompasses it and is mounted rotatably relative to the housing (1) and unadjustable in the setting direction (23).

2. Restrictor valve according to claim 1, characterized in that the two connection openings (29, 30) are aligned coaxially and assigned to opposite sides of the housing (1).

3. Restrictor valve according to claim 2, characterized in that a non-return valve assembly (55) is mounted coaxially in the housing (1) between the two connection openings (29, 30).

4. Restrictor valve according to any of claims 1 to 3, characterized in that at least one of the two connection openings (30) is assigned a plug-in connection device (67) for releasable connection of pressure medium lines and/or hoses.

5. Restrictor valve according to claim 4, characterized in that the restrictor element (17) forms the housing of a plug-in connection device (67), with a collet (68) - externally actuable and with reference to the restrictor element (17) in particular freely rotatable - resting in the assigned restrictor passage section (34).

6. Restrictor valve according to any of claims 1 to 5, characterized in that the restrictor element (17) has a sleeve-shaped section of length (26) containing the assigned connection opening (30) and adjoined coaxially by a restrictor section (37), in particular pin- or spigot-shaped, working in conjunction with the restrictor passage (28), wherein between the sleeve-shaped section of length (26) and the restrictor section (37), one or more passages (35) are provided in the circumferential area of the restrictor section (37), through which the section (34) of the restrictor passage (28) running in the restrictor element (17) communicates with the section of the restrictor passage (28) running in the housing (1).

7. Restrictor valve according to any of claims 1 to 6, characterized in that a locking element (72) is provided to fix the relative position between the restrictor element (17) and the actuating element (7), and is expediently formed by a lock nut (74) supported by the restrictor element (74) and capable of being tightened by the actuating element (7).

8. Restrictor valve according to any of claims 1 to 7, characterized in that the actuating element (7) is pivotably mounted by a sleeve-shaped guide section (80)in a recess of the housing (1), and has an actuating section (13) adjoining the guide section (8) and lying outside this recess, and expediently extending radially outwards relative to the guide section (8).

9. Restrictor valve according to any of claims 1 to 8, characterized in that the housing (1) has an essentially cylindrical external contour, with the two connection openings (29, 30) being assigned to the two opposite end faces of the housing (1).

## Revendications

1. Vanne d'étranglement, avec un boîtier (1), dans lequel passe un canal d'étranglement (28), qui communique avec deux ouvertures de raccordement (29, 30), pour l'arrivée et/ou l'évacuation d'un fluide sous pression, et avec un organe d'étranglement (17), placé sur le boîtier (1), qui coopère avec le canal d'étranglement (28) et qui, pour faire varier sa section de passage, est déplaçable dans un mouvement de va-et-vient, par rapport au boîtier (1), dans une direction de réglage (23), une ouverture de raccordement (30), orientée dans la direction de réglage (23), étant prévue sur l'organe d'étranglement (17), ouverture à laquelle fait suite une portion (34) du canal d'étranglement (28), traversant l'organe d'étranglement (17), caractérisée en ce que l'autre ouverture de raccordement (29) est prévue sur le boîtier (1) et en ce que l'organe d'étranglement (17) est fixé de manière à ne pouvoir tourner par rapport au boîtier (1), autour de l'axe, s'étendant dans la direction de réglage (23), de son mouvement de réglage et est en prise, par une liaison vissée (22), avec un élément d'actionnement (7) en forme d'anneau ou en forme de douille, l'entourant coaxialement, lequel élément ne peut tourner par rapport au boîtier (1) et ne peut être déplacé dans la direction de réglage (23).

2. Vanne d'étranglement selon la revendication 1, caractérisée en ce que les deux ouvertures de raccordement (29, 30) sont orientées coaxialement l'une par rapport à l'autre, en étant affectées à des côtés de boîtier opposés l'un à l'autre.

3. Vanne d'étranglement selon la revendication 2, caractérisée en ce qu'un dispositif à clapet de non-retour (55) est placé coaxialement entre les deux ouvertures de raccordement (29, 30), dans le boîtier (1).

4. Vanne d'étranglement selon l'une des revendications 1 à 3, caractérisée en ce qu'à l'une au moins des deux ouvertures de raccordement (30) est affecté un dispositif de liaison par enfichage (67), pour le raccordement amovible de conduites et/ou de tuyaux de fluide sous pression.

5. Vanne d'étranglement selon la revendication 4, caractérisée en ce que l'organe d'étranglement (17) forme le boîtier d'un dispositif d'assemblage par enfichage (67), une pince de serrage (68), pouvant être actionnée de l'extérieur et pouvant tourner en particulier librement par rapport à l'organe d'étranglement (17), se trouvant dans la portion (34) correspondante du canal d'étranglement.

6. Vanne d'étranglement selon l'une des revendications 1 à 5, caractérisée en ce que l'organe d'étranglement (17) présente une portion de longueur (26) du genre douille, comportant l'ouverture de raccordement (30) correspondante, portion à laquelle fait suite coaxialement une partie d'étranglement (37), en particulier du genre broche ou tenon, coopérant avec le canal d'étranglement (28), tandis qu'entre la portion de longueur (26) du genre douille et la partie d'étranglement (37), un passage (35) au moins est prévu dans la zone périphérique de la partie d'étranglement (37), passage par lequel la portion (34) du canal d'étranglement (28), s'étendant dans l'organe d'étranglement (17), communique avec la portion du canal d'étranglement (28), s'étendant dans le boîtier (1).

7. Vanne d'étranglement selon l'une des revendications 1 à 6, caractérisée en ce qu'il est prévu un élément de blocage (72) destiné à fixer la position relative entre l'organe d'étranglement (17) et l'élément d'actionnement (7), qui est avantageusement formé par un contre-écrou (74), porté par l'organe d'étranglement (17), qui peut être serré avec l'élément d'actionnement (7).

8. Vanne d'étranglement selon l'une des revendications 1 à 7, caractérisée en ce que l'élément d'actionnement (7) avec une portion de guidage (8) du genre douille, est monté rotatif dans un évidement du boîtier (1) et présente une portion d'actionnement (13), faisant suite à la portion de guidage (8), située à l'extérieur de cet évidement, laquelle dépasse avantageusement radialement vers l'extérieur, par rapport à la portion de guidage (8).

9. Vanne d'étranglement selon l'une des revendications 1 à 8, caractérisée en ce que le boîtier (1) présente un contour extérieur sensiblement cylindrique, les deux ouvertures de raccordement (29, 30) étant associées aux deux côtés frontaux opposés l'un à l'autre du boîtier (1).
